# EUROPEAN PATENT SPECIFICATION

(11) **EP 3 822 406 B1**
(45) Date of publication and mention of the grant of the patent: **18.11.2026**
(21) Application number: 19799107.8
(22) Date of filing: 19.04.2019
(51) Int. Cl.: C08K 5/00, C08K 5/3437, D06N 3/14, B32B 27/20, B32B 27/40, C08L 75/08, C08G 18/42, C08G 18/48, C08G 18/76, C09D 175/08, C09J 175/04, C08L 75/06, C09D 175/06, D06N 3/00

(54) **GRAIN-FINISHED LEATHER-LIKE SHEET**
KORNGEPRÄGTE LEDERARTIGE FOLIE
FEUILLE GRANULEUSE SIMILAIRE AU CUIR

(30) Priority: 09.05.2018 JP 2018090999
(43) Date of publication of application: 19.05.2021
(73) Proprietor: Kuraray Co., Ltd., Kurashiki-shi, Okayama 710-0801 (JP)
(72) Inventor: ASHIDA, Tetsuya, Osaka-shi, Osaka 530-0017 (JP); HARA, Kansai, Osaka-shi, Osaka 530-0017 (JP)
(74) Representative: Vossius & Partner Patentanwälte Rechtsanwälte mbB
(86) International application number: PCT/JP2019/016820
(87) International publication number: WO 2019/216164

(56) References cited:
- WO-A1-2017/082273
- JP-A- 2004 052 120
- JP-A- 2004 052 120
- JP-A- 2004 315 987
- JP-A- 2005 097 764
- JP-A- 2009 256 810
- JP-A- 2011 052 336
- JP-A- 2013 208 814
- JP-A- H1 181 156
- US-A1- 2007 231 546
- US-A1- 2015 299 511
- US-A1- 2015 299 511
- US-A1- 2015 299 942

## Description

### [Technical Field]

The present invention relates to a grain-finished leather-like sheet.

### [Background Art]

Grain-finished leather-like sheets such as an artificial leather with a grain-finished external appearance are used as the raw materials of bags, clothing, shoes, and the like. As a grain-finished leather-like sheet, a grain-finished leather-like sheet including a fiber base material and a polyurethane skin film stacked on the fiber base material is known. For example, as a synthetic leather for a steering wheel cover with enhanced durability, a synthetic leather for a steering wheel cover is disclosed in which a fiber base material including a non-woven fabric of filament-type, high-density ultrafine yarns, a urethane pore layer having minute pores, a urethane adhesion layer containing a urethane-based adhesive for bonding the urethane pore layer and a polyurethane skin layer are stacked in this order, and a polyurethane skin layer containing a polyurethane resin produced by polymerization of an isocyanate compound and a polyol compound containing a polycarbonate-based polyol, a fluorine-based polyol, and an ester-based polyol.

A grain-finished leather-like sheet is usually colored before use. Grain-finished leather-like sheets colored in a great variety of red-based colors are known.

Although not as a technique relating to grain-finished leather-like sheets, PTL 2 listed below, for example, discloses coloring a polyurethane resin with a quinacridone red and adding thereto a hindered amine-based light stabilizer as a light stabilizer in the case of producing the polyurethane resin as a two-part curable polyurethane resin. PTL 3 listed below discloses an aqueous dispersion containing a pigment (B), a polyurethane (A), and also at least one polymerization inhibitor or stabilizer (C), wherein a quinacridone red is the pigment (B) and a hindered amine light stabilizer (HALS) is the stabilizer (C). PTL 4 listed below discloses adding a quinacridone-based pigment or a hindered amine-based ultraviolet absorber to a polyurethane resin used as an artificial leather, a synthetic leather, or elastic fibers.
PTL5 relates to a specific suede-like artificial leather and its manufacturing method.
PTL6 concerns a certain synthetic leather article comprising a substrate and a coating on at least one surface of the substrate, wherein the coating comprises at least one resin and at least one reactive dye derivative.
PTL7 relates to a synthetic leather article comprising a fibrous substrate having at least one surface, and a coating on the surface of the substrate, the coating comprising (i) a resin selected from the group consisting of polyurethane resins, polyurea resins, and combinations thereof, and (ii) a polymeric colorant, the polymeric colorant comprising a chromophore and an oligomeric constituent bound to the chromophore.

### [Citation List]

### [Patent Literatures]

[PTL 1] Japanese Laid-Open Patent Publication No. 2016-89326
[PTL 2] Japanese Laid-Open Patent Publication No. 2016-20549
[PTL 3] Japanese Laid-Open Patent Publication No. 2016-505648
[PTL 4] Japanese Laid-Open Patent Publication No. 2015-052093
[PTL5] Japanese Laid-Open Patent Publication No. 2004-052120
[PTL6] US patent application publication US 2015/0299511 A1
[PTL7] US patent application publication US 2007/0231546 A1

### [Summary of Invention]

### [Technical Problem]

As grain-finished leather-like sheets, those that are colored in a great variety of red-based colors using a various pigments in combination are known. In some rare cases, in a grain-finished leather-like sheet colored in a red-based color, cracking may occur over time in a polyurethane skin film, which is the colored layer of the grain-finished leather-like sheet. To analyze the factors of causing cracking in a polyurethane skin film colored in a red-based color, the present inventors have conducted extensive studies on methods of causing cracking in the polyurethane skin film. As a result, according to a test in which a polyurethane skin film is irradiated with carbon arc for 100 hours at a black panel temperature of 63°C with an irradiance of 500±50 W/m², using ultraviolet carbon arc lamp light compliant with JIS B 7751, and thereafter repeatedly subjected to a flexing endurance test using a flexometer under an environment of 20°C for several tens of thousands of cycles to several hundred thousand cycles (hereinafter also referred to as "light-resistant flexing endurance test"), the inventors were able to reproduce cracking occurring in the surface.

Then, as a result of extensive studies on the causes of cracking based on the results of the light-resistant flexing endurance test, the present inventors have found that the occurrence rate of cracking is significantly high when the polyurethane skin film is colored in a red-based bluish color by mixing a quinacridone-based red pigment at a relatively high rate. The inventors have also found that in the case of using, in particular, a polyurethane skin film containing a polyether-based polyurethane and a quinacridone-based red pigment in combination, the occurrence rate of cracking is increased. Then, based on that finding, the inventors have arrived at a grain-finished leather-like sheet in which cracking occurring over time can be suppressed, wherein the grain-finished leather-like sheet is a polyurethane skin film that includes a polyether-based polyurethane, contains a quinacridone-based red pigment, and is colored in a bluish red color.

It is an object of the present invention to provide a grain-finished leather-like sheet in which cracks are less likely to be produced over time, wherein the grain-finished leather-like sheet includes a polyurethane skin film including a polyether-based polyurethane, and is colored in a bluish red color with a quinacridone-based red pigment.

### [Solution to Problem]

The present invention is directed to a grain-finished leather-like sheet as defined in claim 1.
Such a grain-finished leather-like sheet is a polyurethane skin film containing a polyether-based polyurethane, and is colored in a bluish red color having an *L** value of ≤ 80, an *a** value of ≥ 20, and a *b** value of ≤ 15, using a quinacridone-based red pigment. Also, such a grain-finished leather-like sheet is less likely to cause cracking even when it is displayed under store lighting for a long period of time, or used under light for a long period of time.

The polyurethane skin film contains 2 to 10 mass% of the quinacridone-based red pigment as an active component, because the polyurethane skin film can be easily colored in a bluish red color having an *L** value of ≤ 80, an *a** value of ≥ 20, and a *b** value of ≤ 15 in an *L*a*b** color system.

The polyurethane skin film contains 0.05 to 0.3 mass% of a hindered amine-based light stabilizer, because the above-described resistance to cracking of the polyurethane skin film is particularly high. Also, it is preferable that the polyurethane skin film contains 0.05 to 0.2 mass% of a hindered amine-based light stabilizer, because the discoloration of the surface of the polyurethane skin film due to bleeding of the hindered amine-based light stabilizer is less likely to occur.

It is preferable that in the polyurethane skin film, the proportion of the hindered amine light stabilizer to the quinacridone-based red pigment is 0.5 to 5 mass%, because a grain-finished leather-like sheet that is less likely to cause cracking over time can be easily obtained.

According to the present invention, the polyurethane skin film further contains a phenol-based antioxidant, because a grain-finished leather-like sheet having particularly high resistance to cracking can be easily obtained.

Thus, the phenol-based antioxidant in the polyurethane skin film as an affective component constitutes 0.01 to 0.5 mass%.

In the present invention, the proportion of the polyether-based polyurethane in all polyurethanes contained in the polyurethane skin film is 60 mass% or more.

It is preferable that the grain-finished leather-like sheet includes a fiber base material; a polyurethane porous layer stacked on the fiber base material; and a polyurethane adhesion layer that bonds the polyurethane porous layer and the polyurethane skin film together, wherein the polyurethane skin film includes a polyurethane intermediate layer and a polyurethane outermost layer stacked on the polyurethane intermediate layer, because cracking over time is particularly less likely to occur. It is preferable that the polyurethane porous layer permeates into the fiber base material, and has a thickness of 100 to 600 µm, because cracks over time are less likely to be produced. Furthermore, it is preferable that the fiber base material includes a non-woven fabric of nylon-based fibers that are hollow fibers or lotus root-like fibers, because cracking over times is particularly less likely to occur.

### [Advantageous Effects of Invention]

According to the present invention, there is provided a grain-finished leather-like sheet as defined in claim 1, that includes a polyurethane skin film containing a polyether-based polyurethane, and that is colored in a bluish red color with a quinacridone-based red pigment. Also, the grain-finished leather-like sheet is less likely to cause cracking over time.

### [Brief Description of Drawing]

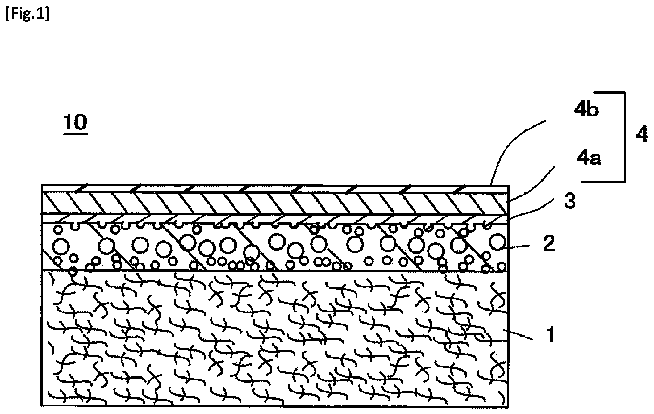

[FIG. 1] FIG. 1 is a schematic cross-sectional view of a grain-finished artificial leather according to an embodiment.

### [Description of Embodiment]

Hereinafter, the grain-finished leather-like sheet according to claim 1 of the present invention will be described in detail. A grain-finished leather-like sheet according to the present embodiment is a grain-finished leather-like sheet as defined in claim 1.

FIG. 1 is a schematic cross-sectional view illustrating a layer configuration of a grain-finished leather-like sheet 10, which is an example of the grain-finished leather-like sheet. The grain-finished leather-like sheet 10 includes a fiber base material 1, a polyurethane porous layer 2 stacked on the fiber base material 1, a polyurethane skin film 4 including a polyurethane intermediate layer 4a and a polyurethane outermost layer 4b attached to the polyurethane intermediate layer 4a, and a polyurethane adhesion layer 3 that bonds the polyurethane porous layer 2 and the polyurethane skin film 4 together. Note that the grain-finished leather-like sheet is not limited to such a layer configuration, and there is no particular limitation on the grain-finished leather-like sheet, as long as it includes a fiber base material and a polyurethane skin film stacked to the fiber base material, and the polyurethane skin film contains a polyether-based polyurethane and a quinacridone-based red pigment. It is preferable that the polyurethane porous layer is stacked on the fiber base material, and the polyurethane skin film is stacked on the polyurethane porous layer, because the polyurethane porous layer serves as a cushioning layer, thus further improving the light-resistant flexing endurance.

As the fiber base material, artificial leather base materials used for producing artificial leather and synthetic leather base materials used for synthetic leather that have been conventionally known, such as a non-woven fabric, a woven fabric, a knitted fabric, or base materials obtained by impregnating the aforementioned materials with an elastic polymer such as a polyurethane, can be used without any particular limitation. The thickness of the fiber base material is also not particularly limited, but is, for example, preferably about 300 to 3000 µm, and more preferably about 500 to 1500 µm. The type of the fibers that form the fiber base material is also not particularly limited, and, for example, nylon-based fibers, polyester-based fibers, polyolefin-based fibers, and polyurethane-based fibers, and the like can be used without any particular limitation.

The fineness and the configuration of the fibers are also not particularly limited. For example, it is possible to use regular fibers having a fineness of more than 1 dtex, or ultrafine fibers having a fineness of less than 1 dtex. As for the fiber configuration, it is possible to use solid fibers, or fibers having voids, such as hollow fibers or lotus root-like fibers. It is preferable that a non-woven fabric of nylon-based fibers that are hollow fibers or lotus root-like fibers is included as the fiber base material because particularly good light-resistant flexing endurance can be achieved.

The polyurethane for forming the polyurethane porous layer and the polyurethane skin film can be obtained by reacting a urethane raw material containing a polymer polyol, an organic polyisocyanate, and a chain extender. The polyurethane is prepared as an organic solvent solution (e.g., a solution of an organic solvent such as dimethylformamide, methyl ethyl ketone, acetone, or toluene), an aqueous dispersion, or an emulsion during production of the grain-finished leather-like sheet.

Specific examples of the polymer polyol include polyether-based polyols such as polyethylene glycol, polypropylene glycol, polytetramethylene glycol, and poly(methyltetramethylene glycol); polycarbonate-based polyols such as polyhexamethylene carbonate diol, poly(3-methyl-1,5-pentylene carbonate)diol, polypentamethylene carbonate diol, and polytetramethylene carbonate diol; polyester-based polyols such as polyethylene adipate diol, polybutylene adipate diol, polypropylene adipate diol, polybutylene sebacate diol, polyhexamethylene adipate diol, poly(3-methyl-1,5-pentylene adipate)diol, poly(3-methyl-1,5-pentylene sebacate)diol, and polycaprolactone diol, or copolymers thereof. These may be used alone, or in a combination of two or more.

Specific examples of the organic polyisocyanate include hardly yellowing diisocyanates, including, for example, aromatic diisocyanates such as 2,4-tolylene diisocyanate, 2,6-tolylene diisocyanate, 4,4'-diphenylmethane diisocyanate, and xylylene diisocyanate ; and non-yellowing diisocyanates, including, for example, aliphatic or alicyclic diisocyanates such as hexamethylene diisocyanate, isophorone diisocyanate, norbornene diisocyanate, and 4,4'-dicyclohexyl methane diisocyanate. If necessary, a multifunctional isocyanate such as trifunctional isocyanate or tetrafunctional isocyanate may also be used. These may be used alone, or in a combination of two or more.

Specific examples of the chain extender include diamines such as hydrazine, ethylenediamine, propylene diamine, hexamethylene diamine, nonamethylene diamine, xylylene diamine, isophoronediamine, piperazine and derivatives thereof, adipic acid dihydrazide, and isophthalic acid dihydrazide; triamines such as diethylenetriamine; tetramines such as triethylene tetramine; diols such as ethylene glycol, propylene glycol, 1,4-butane diol, 1,6-hexane diol, 1,4-bis(β-hydroxyethoxy)benzene, and 1,4-cyclohexane diol; triols such as trimethylol propane; pentaols such as pentaerythritol; and amino alcohols such as amino ethyl alcohol and amino propyl alcohol. These may be used alone, or in a combination of two or more. Monoamines such as ethylamine, propylamine, and butylamine; carboxyl group-containing monoamine compounds such as 4-amino butanoic acid and 6-amino hexanoic acid; monools such as methanol, ethanol, propanol, and butanol may be used together with the chain extender during a chain extending reaction.

The polyurethane for forming the polyurethane porous layer can be formed, for example, by applying, to the surface of the fiber base material, a solution of a polyurethane that can be wet-coagulated, and thereafter immersing the fiber base material in an aqueous coagulation bath to coagulate the porous polyurethane. Also, the polyurethane porous layer may be allowed to permeate into the fiber base material for the purpose of, for example, imparting the shape stability thereto. In this case, the fiber base material is impregnated with the polyurethane solution in advance, and the polyurethane solution is further coated on the fiber base material, and thereafter immersed in an aqueous coagulation bath to coagulate the polyurethane, whereby the porous polyurethane can also be provided inside the fiber base material. The thickness of the polyurethane porous layer is, for example, preferably about 100 to 600 µm, and more preferably about 200 to 400 µm.

The polyurethane skin film containing the polyether-based polyurethane contains a quinacridone-based red pigment, and is colored in a bluish red color having an *L** value of ≤ 80, an *a** value of ≥ 20, and a *b** value of ≤ 15 in an *L*a*b** color system.

The polyether-based polyurethane is not particularly limited, as long as it is a polyurethane that can be obtained by reacting a urethane raw material containing a polyether-based polyol as the polymer polyol. Specific examples thereof include a hardly yellowing polyether-based polyurethane that can be obtained by polymerizing a urethane monomer component containing a polyether-based polyol as the polymer polyol and a hardly yellowing diisocyanate that is an aromatic diisocyanate as the organic polyisocyanate; and a non-yellowing polyether-based polyurethane that can be obtained by polymerizing a urethane monomer component containing a polyether-based polyol as the polymer polyol and a non-yellowing diisocyanate that is an aliphatic or alicyclic diisocyanate as the organic polyisocyanate. These may be used alone, or in a combination of two or more.

The proportion of the polyether-based polyurethane in all polyurethanes contained in the polyurethane skin film is 60 mass% or more, preferably 80 mass% or more, and more preferably 90 to 100 mass%, because the effects of the present invention can be significantly achieved. That is, in a grain-finished leather-like sheet including a polyurethane skin film containing the polyether-based polyurethane, cracking over time is made less likely to occur when a polyurethane skin film colored in a bluish red color having an L* value of ≤ 80, an a* value of ≥ 20, and a b* value of ≤ 15 is formed using a quinacridone-based red pigment.

The polyurethane skin film containing the polyether-based polyurethane contains a quinacridone-based red pigment, and is colored in a bluish red color having an *L** value of ≤ 80, an *a** value of ≥ 20, and a *b** value of ≤ 15 in an L*a*b* color system. Specific examples of the quinacridone-based red pigment include quinacridone red (Pigment Red 122), dichloroquinacridone magenta (Pigment Red 202, Pigment Red 209), quinacridone magenta, and quinacridone violet. The polyurethane skin film may contain other pigments within the range of an *L** value of ≤ 80, an *a** value of ≥ 20, and a *b** value of ≤ 15. Examples of the other pigments include, but are not particularly limited to, anthraquinone-based pigments, diketopyrrolopyrrole-based pigments, and perylene-based pigments.

The content of the
quinacridone-based red pigment contained in the polyurethane skin film, as the active component of the quinacridone-based red pigment, is
2 to 10 mass%. Here, the active component of the quinacridone-based red pigment means the quinacridone-based red pigment alone, excluding a solvent and an additive such as a binder that are contained in the pigment composition to be mixed.

Preferably, a light stabilizer such as a radical scavenger and a radical chain initiation inhibitor is added to the polyurethane skin film containing the quinacridone-based red pigment in order for the number of cycles at which cracking occur in the surface to be 100000 or more in the light-resistant flexing endurance test.

Specific examples of the hindered amine light stabilizer (HALS) include tetrakis(1,2,2,6,6-pentamethyl-4-piperidyl)butane-1,2,3,4-tetracarboxylate, tetrakis(2,2,6,6-tetramethyl-4-piperidyl)butane-1,2,3,4-tetracarboxylate, bis(1,2,2,6,6-pentamethyl-4-piperidyl)sebacate, bis(2,2,6,6-tetramethyl-4-piperidyl)sebacate, bis(1-undecanoxy-2,2,6,6-tetramethyl piperidine-4-yl)carbonate, 1,2,2,6,6-pentamethyl-4-piperidyl methacrylate, and 2,2,6,6-tetramethyl-4-piperidyl methacrylate. Specific examples of the phenol-based antioxidant include dibutyl hydroxy toluene (BHT), 6,6'-di-t-butyl-4,4'-butylidene-m-cresol, 1,3,5-tris(3,5-di-t-butyl-4-hydroxybenzyl)-1,3,5-triazine-2,4,6(1H,3H,5H)-trione, 4,4',4"-(1-methyl propanil-3-ylidene)tris(6-t-butyl-m-cresol), 1,3,5-tris(3,5-di-t-butyl-4-hydroxyphenyl methyl)-2,4,6-trimethyl benzene, and octadecyl-3-(3,5-di-t-butyl-4-hydroxyphenyl)propionate.

Specific examples of the radical chain initiation inhibitor include benzotriazole-based ultraviolet absorbers such as 2-(2H-benzotriazole-2-yl)-4,6-bis(1-methyl-1-phenylethyl)phenol, 2-(2H-benzotriazole-2-yl)-4-(1,1,3,3-tetramethyl butyl)phenol, and 2-(2H-benzotriazole-2-yl)-p-cresol, and 2-(5-chloro-2H-benzotriazole-2-yl)-6-t-butyl-4-methyl phenol; triazine-based ultraviolet absorbers such as 2-(4,6-diphenyl-1,3,5-triazine-2-yl)-5-[2-(2-ethylhexanoyloxy)ethoxy]phenol, and 2,4,6-tris(2-hydroxy-4-hexyloxy-3-methyl phenyl)1,3,5-triazine; benzophenone-based ultraviolet absorbers such as [2-hydroxy-4-(octyloxy)phenyl](phenyl)methanone.

The light stabilizers may be used in a combination of two or more. The present invention specifically uses
HALS and a phenol-based antioxidant in combination.

The content proportion of the HALS contained in the polyurethane skin film, as the active component proportion, is
0.05 to 0.3 mass%, and preferably 0.05 to 0.2 mass%. If the content proportion of the HALS is too high, the HALS tends to bleed to the surface of the polyurethane skin film, thus degrading the external appearance. On the other hand, if the content proportion of the HALS is too low, the number of cycles at which cracking occurs in the surface in the light-resistant flexing endurance test is less likely to be 100000 or more. Here, the active component proportion of the HALS is the proportion of the HALS alone, excluding a solvent and an additive such as a binder that are contained in the light stabilizer composition to be mixed.

The content proportion of the phenol-based antioxidant contained in the polyurethane skin film, as the active component proportion, is 0.01 to 0.5 mass%, and preferably 0.05 to 0.15 mass%. If the content proportion of the phenol-based antioxidant is too low, the number of cycles at which cracking occurs in the surface in the light-resistant flexing endurance test tends to be less likely to be 100000 or more. If the content proportion of the phenol-based antioxidant is too high, the phenol-based antioxidant tends to bleed to the surface of the polyurethane skin film, thus degrading the external appearance. Here, the active component proportion of the phenol-based antioxidant is the proportion of the phenol-based antioxidant alone, excluding a solvent and an additive such as a binder that are contained in the light stabilizer composition to be mixed.

The proportion of the hindered amine light stabilizer to the quinacridone-based red pigment is preferably 0.2 to 10 mass%, and more preferably 0.5 to 5 mass%, because cracking in the polyurethane skin film that is colored in a red-based color can be more easily suppressed.

For example, in the case of bonding the polyurethane skin film to the surface of a polyurethane porous layer, the following method using dry forming can be employed.

A polyurethane film for forming a polyurethane skin film is formed on release paper. Note that if the polyurethane skin film has a stacked structure including a polyurethane intermediate layer and a polyurethane outermost layer attached to the polyurethane intermediate layer, a polyurethane skin film having a stacked structure including a polyurethane outermost layer and a polyurethane intermediate layer can be formed, for example, by forming a film of the polyurethane outermost layer on the release paper, and forming, on the film of the polyurethane outermost layer, a polyurethane film for forming the polyurethane intermediate layer. The polyurethane skin film may be either unfoamed or foamed, but is particularly preferably unfoamed.

The thickness of the polyurethane skin film is preferably 10 to 100 µm, and more preferably 20 to 50 µm. If the polyurethane skin film is too thin, the abrasion resistance of the surface tends to be reduced, or the color development tends to be insufficient.

A polyurethane adhesive is applied to the film of the polyurethane skin film, then dried by removed the solvent completely or incompletely. Then, the polyurethane adhesive stacked on the film of the polyurethane skin film thus formed on the release paper is attached to the surface of the polyurethane porous layer, and then pressed, followed by curing the polyurethane adhesive, thus bonding the polyurethane skin film and the polyurethane porous layer via the polyurethane adhesion layer. Then, the release paper is released from the surface of the polyurethane skin film, whereby a grain-finished leather-like sheet including the polyurethane skin film is obtained.

The thickness of the polyurethane adhesion layer is preferably 5 to 200 µm, and more preferably 30 to 70 µm. If the polyurethane adhesion layer is too thick, the bending resistance tends to be reduced, resulting in a reduced bonding strength.

The total thickness of the polyurethane skin film and the polyurethane adhesion layer is preferably about 10 to 300 µm, more preferably about 30 to 200 µm, and particularly preferably about 50 to 100 µm, because the balance between the mechanical properties and the texture can be maintained.

The grain-finished leather-like sheet according to the present embodiment is a grain-finished leather-like sheet in which the polyurethane skin film contains a quinacridone-based red pigment, and is colored in a bluish red color having an L* value of ≤ 80, an a* value of ≥ 20, and a b* value of ≤ 15 in an L*a*b* color system, and the number of cycles of a light-resistant flexing endurance test at which cracking occurs in a surface of the polyurethane skin film is 100000 or more, when the light-resistant flexing endurance test in which a flexing endurance test is performed under an environment of 20°C using a flexometer is performed on the grain-finished leather-like sheet after the grain-finished leather-like sheet has been irradiated with carbon arc at a black panel temperature of 63°C for 100 hours with an irradiance of 500±50W/m², using ultraviolet carbon arc lamp light compliant with JIS B 7751.

Note that the statement "colored in a bluish red color having an *L** value of ≤ 80, an *a** value of ≥ 20, and a *b** value of ≤ 15 in an L**a*b** color system" is based on the coordinate values of an L**a*b** color system obtained by measuring, using a spectrophotometer, the color of the colored surface in a red-based color, which is the design surface of the grain-finished leather-like sheet. The red coloration has preferably an *L** value of ≤ 80, an *a** value of ≥ 20, and a *b** value of ≤ 15, more preferably satisfies *L** value ≤ 50, *a** value ≥ 25, and -100 ≤ *b** value ≤ 15, and even more preferably satisfies *L** value ≤ 50, *a** value ≥ 25, and -20 ≤ *b** value ≤ 15. Such a bluish red color is more likely to be obtained by using a quinacridone-based red pigment. Note that in an L**a***b** color system, a color is bluish when if *b** value ≤ 15 is satisfied, and the higher the *b** value, the more yellowish the color becomes. A color is reddish if *a** value ≥ 25 is satisfied, and the lower the *a** value, and the more greenish the color becomes.

The grain-finished leather-like sheet of the present embodiment is a grain-finished leather-like sheet that has been adjusted such that the number of cycles of a light-resistant flexing endurance test at which cracking occurs in a surface of the polyurethane skin film is 100000 or more, when the light-resistant flexing endurance test in which a flexing endurance test is performed under an environment of 20°C using a flexometer is performed on the grain-finished leather-like sheet after the grain-finished leather-like sheet has been irradiated with carbon arc at a black panel temperature of 63°C for 100 hours with an irradiance of 500±50W/m², using ultraviolet carbon arc lamp light compliant with JIS B 7751. According to an evaluation using such a light-resistant flexing endurance test, the reduction in the flexing endurance due to exposure to ultraviolet light can be quantitatively evaluated. Also, using such an evaluation method, the present inventors have found that cracking due to accelerated degradation is likely to occur in a grain-finished leather-like sheet including a red-colored polyurethane skin film obtained by mixing a quinacridone-based red pigment with a polyurethane skin film containing a polyether-based polyurethane. Although the number of cycles at which the grain-finished leather-like sheet according to the present embodiment causes cracking in the light-resistant flexing endurance test is 100000 or more, the number of cycles is preferably 200000 or more, and more preferably 300000 or more, because cracking over time is further less likely to occur in a grain-finished leather-like sheet including a polyurethane skin film colored in a red color with a quinacridone-based red pigment.

The grain-finished leather-like sheet according to the present embodiment described above can be suitably used as a grain-finished leather-like sheet that has a grain-finished external appearance resembling a natural leather, and that is used as the skin material of bags, clothing, shoes, and the like. In particular, the grain-finished leather-like sheet of the present invention can be suitably used for the applications, such as bags, of grain-finished leather-like sheets that are required to be colored in a great variety of red-based colors.

### [EXAMPLES]

Hereinafter, the present invention will be described in further detail by way of examples.

### [Example 1]

Island-in-the-sea composite fibers including 45 parts by mass (sea component) of 6-nylon and 55 parts by mass of polystyrene (island component) was melt-spun, then drawn by 3 times, and a fiber oil solution was applied to the fibers, which were then mechanically crimped, and thereafter dried. The resulting crimped fibers were cut into 3-dtex staples of 51 mm, which were then used to form a web, and thereafter, the web was needle-punched alternately from both sides at a total density of about 500 punches/cm², to obtain an entangled non-woven fabric. The entangled non-woven fabric has a basis weight of 350 g/m² and an apparent specific gravity of 0.17. The entangled non-woven fabric was treated with a 4% aqueous solution of polyvinyl alcohol, then compression-set to have a thickness of about 1.3 mm, and the surface was smoothed by buffing. Then, the non-woven fabric was impregnated with a dimethylformamide (hereinafter referred to as "DMF") solution of a polyurethane composed mainly of a polyester-based polyurethane at a concentration of 13%. Furthermore, the same polyurethane solution was applied to the surface of the non-woven fabric in an amount of 100 g/m² as a solid content, and thereafter the non-woven fabric was immersed in a DMF/water liquid mixture, to wet-coagulate the polyurethane into a porous structure. Then, the island component was removed by dissolution in hot toluene, to convert the island-in-the-sea composite fibers into hollow fibers. Thus, a fiber base material having the polyurethane porous layer stacked on and permeated in a surface layer thereof was obtained. The polyurethane porous layer had a thickness of 300 µm.

Next, a polyurethane composition solution that contained 100 parts by mass of a 30% solution of a hardly yellowing polyether-based polyurethane including a polyether-based polyurethane containing an aromatic diisocyanate unit as an organic polyisocyanate unit and a polyether-based polyol unit as a polymer polyol unit, 21 parts by mass of a red vehicle containing 15 mass% of quinacridone red (Pigment Red 122), 11 parts by mass of a red vehicle containing 15 mass% of anthraquinone red, 2 parts by mass of a white vehicle containing titanium oxide, 0.1 parts by mass of a black vehicle containing carbon black, 0.03 parts by mass of bis(2,2,6,6-tetramethyl-4-piperidyl)sebacate (HALS), 0.025 parts by mass of 6,6'-di-t-butyl-4,4'-butylidene-m-cresol (BHT), 30 parts by mass of DMF, and 30 parts by mass of methyl ethyl ketone was applied onto release paper (R-70 manufactured by LINTEC Corporation) such that the thickness after drying was 15 µm, and dried, to form a polyurethane outermost layer. Then, the above-described polyurethane composition solution was further applied onto the polyurethane outermost layer such that the thickness after drying was 20 µm, and dried, to form a polyurethane intermediate layer. A polyurethane skin film thus colored in a red color was formed. Thus, a red polyurethane skin film containing 9.1 mass% of quinacridone red, 0.09 mass% of bis(2,2,6,6-tetramethyl-4-piperidyl)sebacate, and 0.07 mass% of 6,6'-di-t-butyl-4,4'-butylidene-m-cresol was formed.

Then, 130 g/m² of a polyurethane-based adhesive solution was applied to the surface of the polyurethane intermediate layer, which was dried for 15 seconds at 120°C to vaporize the solvent, and thereafter attached to the polyurethane porous layer. Note that a polyurethane-based adhesive solution containing, as an adhesive component, 100 parts by mass of a cross-linkable polyurethane-based adhesive to which a crosslinking agent and a cross-linking accelerator were added, and containing 5 parts by mass of DMF and 10 parts by mass of ethyl acetate as solvents was used as the polyurethane-based adhesive solution. Then, the polyurethane adhesive was allowed to permeate the polyurethane porous layer, while the resulting stack intermediate were pressure-bonded by being pressed by a roll of the polyurethane porous layer and the fiber base material, with a clearance corresponding to about 65% of a total thickness of 1.6 mm provided therebetween. Then, after 3-minute drying at 130°C, the whole was subjected to aging treatment at 50°C for 3 days, and thereafter the release paper was released, whereby a grain-finished artificial leather, which was a grain-finished leather-like sheet in a bluish red color, was obtained.

Then, the obtained grain-finished artificial leather was evaluated as follows.

### (Color Measurement)

The coordinate values in the *L*a*b** color system of the surface of the grain-finished artificial leather were measured using a spectrophotometer (CM-3700 manufactured by Minolta). The measurement was performed using three samples (N=3), and the average value was calculated.

### (Light-resistant Flexing Endurance Test)

The grain-finished artificial leather was irradiated with carbon arc light at a relative humidity of 50±5°C and a black panel temperature of 63°C for 100 hours with an irradiance of 500±50W/m², using ultraviolet carbon arc lamp light compliant with JIS B 7751. Then, a flexing endurance test was performed on the grain-finished artificial leather under an environment of a relative humidity of 65±5% and a temperature of 20±2°C, using a flexometer compliant with JIS K 6545, and the presence or absence of the occurrence of cracking in the surface was checked for every 100000 flexing cycles. Cracking was visually checked using a 30X magnifier. Then, the number of cycles were determined as "Under 100000" when cracking was confirmed after 100000 cycles, and as "100000" when cracking was confirmed after 200000 cycles. For the rest of the test, the determination was made in the same manner for every "100000 cycles". Note that each cycle was performed using three samples (N=3). Then, it was determined that cracking occurred when cracking occurred in one of the samples. Note that the flexing endurance without irradiation of carbon arc light was also evaluated in the same manner.

### (Bleeding Evaluation)

In checking the cracking after the above-described light-resistant flexing endurance test, the presence or absence of discoloration due to bleeding of HALS or BHT to the surface was checked.

The above-described results are shown in Table 1 below.

**[Table 1]**

| Example No. | Polyurethane skin film | | | | | | | | Evaluation results | | | | | |
|---|---|---|---|---|---|---|---|---|---|---|---|---|---|---|
| | Polyurethane | Red pigment (mass%) | | Light stabilizer (mass%) | | Antioxidant (mass%) | | Proportion of HALS to red pigment (mass%) | L* | a* | b* | Light-resistant flexing endurance | Flexing endurance (without irradiation) | Bleeding |
| 1 | Polyether-based | Pigment Red 122 (quinacridone red) | 9.1 | HALS | 0.09 | BHT | 0.07 | 1.0 | 35.4 | 26.8 | 3.3 | 300000 | Over 500000 | Not occurred |
| 2 | Polyether-based | Pigment Red 122 (quinacridone red) | 9.1 | HALS | 0.18 | BHT | 0.07 | 2.0 | 35.6 | 25.9 | 3.3 | 300000 | Over 500000 | Not occurred |
| 3 | Polyether-based | Pigment Red 122 (quinacridone red) | 9.1 | HALS | 0.27 | BHT | 0.07 | 3.0 | 35.6 | 26.2 | 3.2 | 400000 | Over 500000 | Occurred |
| 4* | Polyether-based | Pigment Red 122 (quinacridone red) | 9.1 | HALS | 0.09 | BHT | 0 | 1.0 | 35.4 | 27.0 | 3.5 | 100000 | Over 500000 | Not occurred |
| 5 | Polyether-based | Pigment Red 122 (quinacridone red) | 2.7 | HALS | 0.09 | BHT | 0.07 | 3.3 | 47.9 | 44.4 | 12.7 | 300000 | Over 500000 | Not occurred |
| 6 | Polyether-based | Pigment Red 202 (quinacridone red) | 8.4 | HALS | 0.08 | BHT | 0.07 | 1.0 | 34.5 | 31.2 | 5.5 | 300000 | Over 500000 | Not occurred |
| 7 | Polyether-based/ polyester-based =60/40 | Pigment Red 122 (quinacridone red) | 9.1 | HALS | 0.08 | BHT | 0.07 | 0.9 | 35.3 | 27.5 | 3.5 | 300000 | Over 500000 | Not occurred |
| Com. Ex. 1 | Polyether-based | Pigment Red 122 (quinacridone red) | 9.1 | HALS | 0.001 | BHT | 0.001 | 0.0 | 35.4 | 26.8 | 2.9 | Under 100000 | Over 500000 | Not occurred |
| Com. Ex. 2 | Polyether-based | Pigment Red (Anthraquinone-based) | 9.1 | HALS | 0.001 | BHT | 0.001 | 0.0 | 41.8 | 45.9 | 17.1 | Over 500000 | Over 500000 | Not occurred |
| Com. Ex. 3 | Polycarbonate-based | Pigment Red 122 (quinacridone red) | 9.1 | HALS | 0.001 | BHT | 0.001 | 0.0 | 37.5 | 27.5 | 3.5 | 200000 | Over 500000 | Not occurred |
| Com. Ex. 4 | Polycarbonate-based | Pigment Red (Anthraquinone-based) | 9.1 | HALS | 0.001 | BHT | 0.001 | 0.0 | 46.3 | 44.1 | 16.5 | Over 500000 | Over 500000 | Not occurred |

### [Example 2]

A grain-finished artificial leather was obtained and evaluated in the same manner as in Example 1 except that the polyurethane skin film contained HALS in an amount of 0.18 mass% instead of 0.09 mass%. The results are shown in Table 1.

### [Example 3]

A grain-finished artificial leather was obtained and evaluated in the same manner as in Example 1 except that the polyurethane skin film contained HALS in an amount of 0.27 mass% instead of 0.09 mass%. The results are shown in Table 1.

### [Example 4 - for reference]

A grain-finished artificial leather was obtained and evaluated in the same manner as in Example 1 except that the polyurethane skin film did not contain BHT, instead of containing 0.07 mass% of BHT. The results are shown in Table 1.

### [Example 5]

A grain-finished artificial leather was obtained and evaluated in the same manner as in Example 1 except that the polyurethane composition solution for forming the polyurethane intermediate layer and the polyurethane outermost layer contained 5.6 parts by mass of a red vehicle containing 15 mass% of quinacridone red (Pigment Red 122), 9.4 parts by mass of a white vehicle containing titanium oxide, and 3.1 parts by mass of a yellow vehicle containing disazo yellow, instead of containing 21 parts by mass of a red vehicle containing 15 mass% of quinacridone red (Pigment Red 122), 11 parts by mass of a red vehicle containing 15 mass% of anthraquinone red, 2 parts by mass of a white vehicle containing titanium oxide, and 0.1 parts by mass of a black vehicle containing carbon black. The polyurethane skin film contained 2.7 mass% of quinacridone red, 0.09 mass% of bis(2,2,6,6-tetramethyl-4-piperidyl)sebacate, and 0.07 mass% of 6,6'-di-t-butyl-4,4'-butylidene-m-cresol. The results are shown in Table 1.

### [Example 6]

A grain-finished artificial leather was obtained and evaluated in the same manner as in Example 1 except that the polyurethane composition solution for forming the polyurethane intermediate layer and the polyurethane outermost layer contained 21 parts by mass of a red vehicle containing 15 mass% of quinacridone red (Pigment Red 202), 11 parts by mass of a red vehicle containing 15 mass% of anthraquinone red, 2 parts by mass of a white vehicle containing titanium oxide, and 0.1 parts by mass of a black vehicle containing carbon black, instead of containing 21 parts by mass of a red vehicle containing 15 mass% of quinacridone red (Pigment Red 122), 11 parts by mass of a red vehicle containing 15 mass% of anthraquinone red, 2 parts by mass of a white vehicle containing titanium oxide, and 0.1 parts by mass of a black vehicle containing carbon black. The polyurethane skin film contained 8.4 mass% of quinacridone red, 0.08 mass% of bis(2,2,6,6-tetramethyl-4-piperidyl)sebacate, and 0.07 mass% of 6,6' -di-t-butyl-4,4'-butylidene-m-cresol. The results are shown in Table 1.

### [Example 7]

A grain-finished artificial leather was obtained and evaluated in the same manner as in Example 1 except that the content proportion of the polyether-based polyurethane in all the polyurethanes contained in the polyurethane skin film was changed to 60 mass% by using a mixture of a hardly yellowing polyether-based polyurethane and a polyester-based polyurethane containing an aromatic diisocyanate as an organic polyisocyanate unit and a polyester-based polyol as a polymer polyol unit, in place of a 30% solution of a hardly yellowing polyether-based polyurethane including a polyether-based polyurethane containing an aromatic diisocyanate as an organic polyisocyanate unit and a polyether-based polyol as a polymer polyol unit. The results are shown in Table 1.

### [Comparative Example 1]

A grain-finished artificial leather was obtained and evaluated in the same manner as in Example 1 except that the polyurethane skin film contained 0.001 mass% of HALS and 0.001 mass% of BHT, instead of containing 0.09 mass% of HALS and 0.07 mass% of BHT. The results are shown in Table 1.

### [Comparative Example 2]

A grain-finished artificial leather was obtained and evaluated in the same manner as in Example 1 except that the polyurethane composition solution for forming the polyurethane intermediate layer and the polyurethane outermost layer contained a red vehicle containing 15 mass% of anthraquinone red, instead of containing a red vehicle containing 15 mass% of quinacridone red (Pigment Red 122), whereby an attempt was made to color the polyurethane skin layer in a red color similar to that of Example 1. The results are shown in Table 1. Although an attempt was made to color the polyurethane skin layer in a bluish red color, it was not possible to obtain a bluish red color equivalent to that of Example 1.

### [Comparative Example 3]

A grain-finished artificial leather was obtained and evaluated in the same manner as in Comparative Example 1 except that the polyurethane composition solution for forming the polyurethane intermediate layer and the polyurethane outermost layer contained 100 parts by mass of a 30% solution of a non-yellowing polycarbonate-based polyurethane including a polycarbonate-based polyurethane containing an aliphatic diisocyanate as an organic polyisocyanate unit and a polycarbonate-based polyol as a polymer polyol unit, instead of containing 100 parts by mass of a 30% solution of a hardly yellowing polyether-based polyurethane. The results are shown in Table 1.

### [Comparative Example 4]

A grain-finished artificial leather was obtained and evaluated in the same manner as in Comparative Example 2 except that the polyurethane composition solution for forming the polyurethane intermediate layer and the polyurethane outermost layer contained 100 parts by mass of a 30% solution of a hardly yellowing polycarbonate-based polyurethane including a polycarbonate-based polyurethane containing an aromatic diisocyanate as an organic polyisocyanate unit and a polycarbonate-based polyol as a polymer polyol unit, instead of containing 100 parts by mass of a 30% solution of a hardly yellowing polyether-based polyurethane, whereby an attempt was made to color the polyurethane skin layer in a color similar to that of Example 1. The results are shown in Table 1.

Referring to Table 1, all of the grain-finished artificial leathers obtained in Examples 1 to 7 according to the present invention were colored in a bluish red color having an *L** value of ≤ 80, an *a** value of ≥ 20, and a *b** value of ≤ 15, and had excellent light-resistant flexing endurance. On the other hand, the grain-finished artificial leather obtained in Comparative Example 1 contained the light stabilizer in a smaller amount, and was therefore inferior in light-resistant flexing endurance. The grain-finished artificial leather obtained in Comparative Example 2, which was colored using an anthraquinone-based red pigment, had excellent light-resistant flexing endurance despite containing the light stabilizer in a smaller amount, but had a *b** value of 17.1, and lacked blueness. Note that the grain-finished artificial leather obtained in Comparative Example 4, which had a polyurethane skin film free of a polyether-based polyurethane, lacked blueness. However, it was not inferior in light-resistant flexing endurance despite containing the light stabilizer in a smaller amount.

### [Reference Signs List]

- 1.: Fiber base material
- 2.: Polyurethane porous layer
- 3.: Polyurethane adhesion layer
- 4.: Polyurethane skin film
- 4a.: Polyurethane intermediate layer
- 4b.: Polyurethane outermost layer
- 10.: Grain-finished leather-like sheet

## Claims

1. A grain-finished leather-like sheet comprising a fiber base material and a polyurethane skin film layer containing a polyether-based polyurethane, wherein the content proportion of the polyether-based polyurethane in all polyurethanes contained in the polyurethane skin film layer is 60 mass% or more,
wherein the polyurethane skin film layer contains 2 to 10 mass% of a quinacridone-based red pigment as an active component, 0.05 to 0.3 mass% of a hindered amine light stabilizer and 0.01 to 0.5 mass% of a phenol-based antioxidant as an active component, and is colored in a red color having an *L** value of ≤ 80, an *a** value of ≥ 20, and a *b** value of ≤ 15 in an L*a*b* color system, and
the number of cycles of a flexing endurance test at which cracking occurs in a surface of the polyurethane skin film layer is 100000 or more, when the flexing endurance test is performed on the grain-finished leather-like sheet under an environment of 20°C using a flexometer compliant with JIS K 6545 after the grain-finished leather-like sheet has been irradiated with carbon arc at a black panel temperature of 63°C for 100 hours with an irradiance of 500±50W/m², using ultraviolet carbon arc lamp light compliant with JIS B 7751.

2. The grain-finished leather-like sheet according to claim 1,
wherein the polyurethane skin film layer contains 0.05 to 0.2 mass% of the hindered amine light stabilizer.

3. The grain-finished leather-like sheet according to claim 1 or 2,
wherein the proportion of the hindered amine light stabilizer to the quinacridone-based red pigment is 0.5 to 5 mass%.

4. The grain-finished leather-like sheet according to any one of claims 1 to 3, comprising:
the fiber base material; a polyurethane porous layer stacked on the fiber base material; and a polyurethane adhesion layer that bonds the polyurethane porous layer and the polyurethane skin film layer together,
wherein the polyurethane skin film layer includes a polyurethane intermediate layer and a polyurethane outermost layer stacked on the polyurethane intermediate layer.

5. The grain-finished leather-like sheet according to claim 4,
wherein the polyurethane porous layer permeates into the fiber base material, and has a thickness of 100 to 600 µm.

6. The grain-finished leather-like sheet according to any one of claims 1 to 5,
wherein the fiber base material includes a non-woven fabric of nylon-based fibers that are hollow fibers or lotus root-like fibers.

## Patentansprüche

1. Eine korngeprägte lederartige Folie, umfassend einen Fasergrundstoff und eine Polyurethan-Hautfilmschicht, welche ein Polyurethan auf Polyetherbasis enthält, wobei der Gehaltsanteil des Polyurethans auf Polyetherbasis in allen in der Polyurethan-Hautfilmschicht enthaltenen Polyurethanen 60 Massen-% oder mehr beträgt,
wobei die Polyurethan-Hautfilmschicht 2 bis 10 Massen-% eines roten Pigments auf Chinacridonbasis als eine aktive Komponente, 0,05 bis 0,3 Massen-% eines gehinderten Amin-Lichtstabilisators und 0,01 bis 0,5 Massen-% eines Antioxidationsmittels auf Phenolbasis als eine aktive Komponente enthält, und mit einer roten Farbe gefärbt ist, welche einen *L**-Wert von ≤ 80, einen *a**-Wert von ≥ 20 und einen *b**-Wert von ≤ 15 in dem L*a*b*-Farbsystem aufweist, und
die Anzahl der Zyklen bei einer Dauerbiegeprüfung, bei welcher Risse in der Oberfläche der Polyurethan-Hautfilmschicht auftreten, 100.000 oder mehr beträgt, wenn die Dauerbiegeprüfung an der korngeprägten lederartigen Folie bei einer Umgebungstemperatur von 20°C unter Verwendung eines Flexometers gemäß JIS K 6545 durchgeführt wird, nachdem die korngeprägte lederartige Folie 100 Stunden lang bei einer Black-Panel-Temperatur von 63°C mit einer Bestrahlungsstärke von 500±50 W/m² unter Verwendung von UV-Kohlenstoffbogenlampenlicht gemäß JIS B 7751 einer Kohlenbogenbestrahlung ausgesetzt wurde.

2. Die korngeprägte lederartige Folie gemäß Anspruch 1,
wobei die Polyurethan-Hautfilmschicht 0,05 bis 0,2 Massen-% des gehinderten Amin-Lichtstabilisators enthält.

3. Die korngeprägte lederartige Folie gemäß Anspruch 1 oder 2,
wobei das Verhältnis des gehinderten Amin-Lichtstabilisators zu dem roten Pigment auf Chinacridonbasis 0,5 bis 5 Massen-% beträgt.

4. Die korngeprägte lederartige Folie gemäß einem der Ansprüche 1 bis 3, umfassend:
den Fasergrundstoff; eine auf dem Fasergrundstoff aufgebrachte poröse Polyurethanschicht; und eine Polyurethan-Haftschicht, welche die poröse Polyurethanschicht und die Polyurethan-Hautfilmschicht miteinander verbindet,
wobei die Polyurethan-Hautfilmschicht eine Polyurethan-Zwischenschicht und eine auf der Polyurethan-Zwischenschicht aufgebrachte äußerste Polyurethanschicht beinhaltet.

5. Die korngeprägte lederartige Folie gemäß Anspruch 4,
wobei die poröse Polyurethanschicht in den Fasergrundstoff eindringt und eine Dicke von 100 bis 600 µm aufweist.

6. Die korngeprägte lederartige Folie gemäß einem der Ansprüche 1 bis 5,
wobei der Fasergrundstoff ein Vlies aus Fasern auf Nylonbasis beinhaltet, bei denen es sich um Hohlfasern oder lotuswurzelartige Fasern handelt.

## Revendications

1. Feuille similaire à du cuir grainé comprenant un matériau de base fibreux et une couche formant film de peau en polyuréthane contenant un polyuréthane à base de polyéther, dans laquelle la proportion en contenu du polyuréthane à base de polyéther dans tous les polyuréthanes contenus dans la couche formant film de peau en polyuréthane est de 60 % en masse ou plus,
dans laquelle la couche formant film de peau en polyuréthane contient 2 à 10 % en masse d'un pigment rouge à base de quinacridone en tant que composant actif, 0,05 à 0,3 % en masse d'un stabilisant à la lumière à amine encombrée et 0,01 à 0,5 % en masse d'un antioxydant à base de phénol en tant que composant actif, et est colorée en une couleur rouge ayant une valeur *L** < 80, une valeur *a** > 20, et une valeur *b** < 15 dans le système colorimétrique L*a*b*, et
le nombre de cycles d'un test d'endurance à la flexion auquel survient une craquelure dans la surface de la couche formant film de peau en polyuréthane est de 100 000 ou plus, quand le test d'endurance à la flexion est effectué sur la feuille similaire à du cuir grainé dans un environnement à 20 °C et utilise un flexomètre conforme à la norme JIS K 6545 après que la feuille similaire à du cuir grainé a été irradiée au moyen d'un arc au carbone à une température de panneau noir de 63 °C pendant 100 heures avec un éclairement énergétique de 500 ± 50 W/m², utilisant la lumière d'une lampe ultraviolette à arc au carbone conforme à la norme JIS B 7751.

2. Feuille similaire à du cuir grainé selon la revendication 1, dans laquelle la couche formant film de peau en polyuréthane contient 0,05 à 0,2 % en masse du stabilisant à la lumière de type amine encombrée.

3. Feuille similaire à du cuir grainé selon la revendication 1 ou 2, dans laquelle la proportion du stabilisant à la lumière à amine encombrée par rapport au pigment rouge à base de quinacridone est de 0,05 à 5 % en masse.

4. Feuille similaire à du cuir grainé selon l'une quelconque des revendications 1 à 3, comprenant :
le matériau de base fibreux ; une couche poreuse en polyuréthane empilée sur le matériau de base fibreux ; et une couche d'adhésion en polyuréthane qui lie ensemble la couche poreuse en polyuréthane et la couche formant film de peau en polyuréthane,
dans laquelle la couche formant film de peau en polyuréthane inclut une couche intermédiaire en polyuréthane et une couche extérieure en polyuréthane empilée sur la couche intermédiaire en polyuréthane.

5. Feuille similaire à du cuir grainé selon la revendication 4, dans laquelle la couche poreuse en polyuréthane passe par perméation dans le matériau de base fibreux, et a une épaisseur de 100 à 600 µm.

6. Feuille similaire à du cuir grainé selon l'une quelconque des revendications 1 à 5, dans laquelle le matériau de base fibreux inclut une étoffe non tissée de fibres à base de nylon qui sont des fibres creuses ou des fibres de type rhizome de lotus.
